# EUROPEAN PATENT APPLICATION

(11) **EP 2 466 952 A1**
(43) Date of publication of application: **20.06.2012**
(21) Application number: 10807893.2
(22) Date of filing: 12.05.2010
(51) Int. Cl.: H04W 36/08

(54) **CELL SWITCHING METHOD AND APPARATUS**

(30) Priority: 14.08.2009 CN 200910166151
(71) Applicant: ZTE Corporation, Shenzhen, Guangdong 518057 (CN)
(72) Inventor: ZHANG, Shuang, Guangdong 518057 (CN); CHEN, Lijun, Guangdong 518057 (CN); ZHAO, Zhiyong, Guangdong 518057 (CN)
(74) Representative: Bongiovanni, Simone
(86) International application number: PCT/CN2010/072669
(87) International publication number: WO 2011/017948

(57) **Abstract**

The invention discloses a cell handover method and device. The method comprises the following steps: a network side acquires cell information of one or more candidate cells while performing cell handover, wherein the cell information includes an identifier for indicating whether the candidate cells corresponding to the cell information support voice services over adaptive multi-user orthogonal sub channels (VAMOS); and the network side determines a target cell for handover from one or more candidate cells according to the identifier. The method optimizes the network resource and improves the frequency spectrum utilization ratio.

## Description

### Technical field of the invention

The invention relates to the field of communications, and specifically to a cell handover method and device.

### Background of the invention

In wireless communication network, the movement of terminal position, the interference of surrounding environment and the change of wireless environment and the like will cause decline in the quality of terminal communication, thereby easily causing call drop. Since the wireless communication network is composed of a plurality of service cells, in such a case, services can be switched to cells of good communication quality through handover process, which ensures the normal proceeding of communication services and improves the network quality.

The so-called handover refers to a process that the original channel is changed and switched into another idle channel to continue a call, when a mobile station (MS for short, or terminal) moves from a base station coverage area to another base station coverage area during a call, or when external interference causes decline in the call quality.

Based on different trigger conditions, there are many types of intra-cell handover, such as the following.

Sub-cell handover, it is intra-cell handover of concentric cell technology and dual-frequency common-cell based on path loss time advance (TA for short) and based on carrier/interference ratio (C/I for short).

Uplink/downlink interference handover, when interference occurs, each channel interference within the cell is different, so the interference problem can be solved through intra-cell handover.

Uplink/downlink quality handover, when reception quality is poor and exceeds a predefined threshold, inter-cell handover caused by quality problem is triggered.

Uplink/downlink level handover, in order to avoid that interference handover or quality handover conditions cannot be achieved due to low interference level, in a situation where the level is attenuated seriously, uplink/downlink level inter-cell handover is triggered.

Fast level drop handover, it is an inter-cell handover algorithm employed when drastic changes in the wireless environment of the service cell cause the fast drop of reception level.

Furthermore, there is inter-cell handover such as MS-base station (base transceiver station, BTS for short) super-distance handover, Power BudGeT (PBGT for short) handover, macro/micro handover and directional transfer handover and the like.

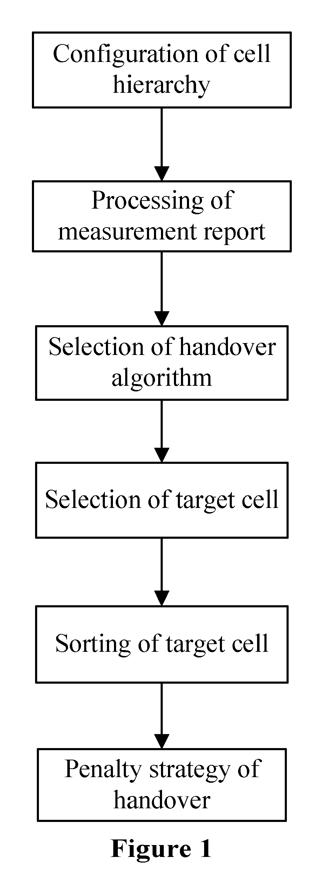

Fig. 1 shows a flowchart of handover according to related technologies. As shown in Fig. 1, the handover implementation process comprises: configuration of cell hierarchy, processing of measurement report, selection of handover algorithm, selection of candidate cell, sorting of candidate cell and penalty strategy of handover.

With the increasing number of global system for mobile communication (GSM for short) users, voice services increase, which brings a huge pressure to the existing network. Fierce market competition results in that the price of voice services is getting lower and lower, so operators expect to make better use of the existing network hardware resources to improve the utilization ratio of spectrum resources. Voice services over adaptive multi-user orthogonal sub channels (VAMOS for short) multiplex two or more users on the same time slot to increase the voice capacity of each BTS.

The VAMOS introduces a new modulation mode α-quadrate phase shift keying (α-QPSK for short) to implement multiplexing of two sub-channels on the same time slot to double the capacity of each BTS transceiver. A new training sequence is employed to improve the quadrature-related performance of the existing training sequence. VAMOS channels can be full speed and half speed ones: full speed voice traffic channels (TCH/FS for short), half speed voice traffic channels (TCH/HS for short), enhanced full speed voice traffic channels (TCH/EFS), adaptive full speed voice traffic channels (TCH/AFS), adaptive half speed voice traffic channels (TCH/AHS) and wideband full speed voice traffic channels (TCH/WFS) as well as related joint signalling channels. The objective is not to reduce the call quality. VAMOS functions need to be supported by a terminal with conventional down-linked advanced receiver performance (DARP for short) phase 1 capability or by a special VAMOS terminal. A conventional Gaussian minimum shift keying (GMSK for short) terminal can be connected to a VAMOS cell, but still keeps the original modulation mode.

VAMOS allows the multiplexing of two or more users on the same time slot to double the capacity of the network. But some sites in the communication network were established earlier. Because part of existing network equipment is obsolete, some BTS coverage areas cannot support the VAMOS function, which results in cells opening the VAMOS not forming continuous coverage. When cell handover occurs, in a list of candidate cells that meet the requirements, some candidate cells support the VAMOS, but some do not. In different cases, handover the terminal supporting the VAMOS to a candidate cell supporting the VAMOS or a candidate cell not supporting the VAMOS has different impacts on the network. For example, handover of the terminal supporting the VAMOS to a target cell supporting the VAMOS can be performed by multiplexing the same time slot with other users to improve the utilization ratio of the frequency spectrum. Moreover, the VAMOS makes wireless resource scheduling more flexible, which can effectively release the network load.

However, related technologies do not differentiate whether the switched candidate cells support the VAMOS. Therefore, it is possible to result in increased network load of the target cell, thereby causing decline in the network quality.

### Summary of the invention

The invention is provided for the problems that the related technologies do not differentiate whether the candidate cells support the VAMOS, possibly causing the increasing of the network load of the target cell, and thereby the decline in the network quality. To this end, the main objective of the invention is to provide a cell handover scheme to solve at least one of the above problems.

In order to achieve the objective above, according to one aspect of the invention, a cell handover method is provided.

The handover method according to the invention comprises the steps of: a network side obtaining cell information of one or more candidate cells while performing cell handover, wherein the cell information includes an identifier for indicating whether the candidate cells corresponding to the cell information support voice services over adaptive multi-user orthogonal sub channels (VAMOS); and the network side determining a target cell for handover from one or more candidate cells according to the identifier.

Preferably, the step that the network side determines a target cell for handover from one or more candidate cells according to the identifier comprises that: the network side dividing the candidate cells into two classes according to whether one or more candidate cells support the VAMOS, and respectively setting different class priorities for the candidate cells in the two classes, wherein the class priorities of the candidate cells of the same class are the same; and the network side determining a target cell for handover from one or more candidate cells according to the class priority of one or more candidate cells.

Preferably, the step that the network side determines a target cell for handover from one or more candidate cells according to the class priority of one or more candidate cells also comprises that: the network side setting a cell priority for each of one or more candidate cells; and the network side determining a target cell for handover from candidate cells of the same class priority according to the cell priority of one or more candidate cells.

Preferably, if the number of idle channels of the candidate cells supporting the VAMOS is more than or equal to the number of idle channels of the candidate cells not supporting the VAMOS in one or more candidate cells, the class priority of the candidate cells supporting the VAMOS is higher than the priority of the candidate cells not supporting the VAMOS; and if the number of idle channels of the candidate cells supporting the VAMOS is less than the number of idle channels of the candidate cells not supporting the VAMOS in one or more candidate cells, the class priority of the candidate cells supporting the VAMOS is lower than the priority of the candidate cells not supporting the VAMOS.

Preferably, the class priority is higher than the cell priority.

Preferably, the step that the network side determines a target cell for handover from one or more candidate cells according to the cell information comprises that: the network side determining a target cell for handover from one or more candidate cells according to whether a terminal in which the cell handover occurs supports the VAMOS and the identifier.

In order to achieve the objective above, according to another aspect of the invention, a cell handover device is provided.

The device according to the invention is located on a network side, and comprises: an acquisition module, which is adapted for acquiring cell information of one or more candidate cells, wherein the cell information includes an identifier for indicating whether the candidate cells corresponding to the cell information support voice services over adaptive multi-user orthogonal sub channels (VAMOS); and a handover module, which is adapted for determining a target cell for handover from the one or more candidate cells according to the cell information identifier.

Preferably, the handover module comprises: a first priority processing sub-module, which is adapted for dividing the candidate cells into two classes according to whether the one or more candidate cells support the VAMOS, and respectively setting different class priorities for the candidate cells in the two classes, wherein the class priorities of the candidate cells of the same class are the same; and a first handover sub-module, which is adapted for determining a target cell for handover from one or more candidate cells according to the class priority.

Preferably, the handover module also comprises: a second priority processing sub-module, which is adapted for setting a cell priority for each of one or more candidate cells; and a second handover sub-module, which is adapted for determining a target cell for handover from candidate cells of the same class priority according to the class priority and the cell priority.

Preferably, the handover module also comprises: a determination sub-module, which is adapted for determining whether a number of idle channels of the candidate cells supporting the VAMOS is more than or equal to a number of idle channels of the candidate cells not supporting the VAMOS in one or more candidate cells; and the first priority processing sub-module is specifically adapted for, when the determination sub-module determines that the number of the idle channels of the candidate cells supporting the VAMOS is more than or equal to the number of the idle channels of the candidate cells not supporting the VAMOS in one or more candidate cells, setting the class priority of the candidate cells supporting the VAMOS higher than the priority of the candidate cells not supporting the VAMOS; and when the determination sub-module determines that the number of the idle channels of the candidate cells supporting the VAMOS is less than the number of the idle channels of the candidate cells not supporting the VAMOS in one or more candidate cells, setting the class priority of the candidate cells supporting the VAMOS lower than the priority of the candidate cells not supporting the VAMOS.

Through the invention, by adding the identifier for indicating whether the candidate cells support the VAMOS to the cell information of the candidate cells, the network side selects the switched target cell according to the identifier. It solves the problems that the related technologies do not differentiate whether the candidate cells support the VAMOS to possibly cause the increasing of the network load of the target cell, thereby causing decline in the network quality, and hence achieving the effects of optimizing the network resource and improving the frequency spectrum utilization ratio.

### Brief description of the drawings

The drawings illustrated here provide further understanding of the invention, and constitute a part of the application. The schematic embodiments of the invention and the descriptions thereof are used for explaining the invention, and do not constitute unduly limitation of the invention. In the drawings:
Fig. 1 shows a flowchart of handover according to related technologies;
Fig. 2 shows a flowchart of a cell handover method according to the embodiments of the invention;
Fig. 3 shows a flowchart of a specific target cell handover method according to the embodiments of the invention;
Fig. 4 shows a flowchart of a method according to embodiment one of the invention;
Fig. 5 shows a flowchart of a method according to embodiment two of the invention;
Fig. 6 shows a flowchart of a method according to embodiment three of the invention;
Fig. 7 shows a structure diagram of a device according to the embodiments of the invention;
Fig. 8 shows a preferred structure diagram of a device according to the embodiments of the invention; and
Fig. 9 shows another preferred structure diagram of a device according to the embodiments of the invention.

### Detailed description of the embodiments

It should be noted that, if there is no conflict, the embodiments of the application and features of the embodiments can be combined with each other. The invention is described below with reference to the drawings in conjunction with the embodiments in detail.

In the following embodiments, steps shown in the flowcharts of the drawings can be executed in, for example, a computer system with a group of computer-executable instructions. Although a logic order is shown in the flowcharts, in some cases, steps shown or described can be executed in an order different from the order herein.

In the following embodiments, in consideration of the problems that the related technologies do not differentiate whether the candidate cells support the VAMOS to possibly cause the increasing of the network load of the target cell, thereby causing decline in the network quality, a cell handover method is provided. It comprises the steps of: a network side acquires cell information of one or more candidate cells while performing cell handover, wherein the cell information includes an identifier for indicating whether the candidate cells corresponding to the cell information support the VAMOS; and the network side determines a target cell for handover from one or more candidate cells according to the identifier. While performing cell handover, the embodiments of the present invention allow the network side to take one more factor into consideration, that is: whether the candidate cells support the VAMOS, when the priority is defined during the sorting of candidate cells. Through the definition of the priority, during sorting, the candidate cells can be selectively switched to the target cell in which the network resources can be used efficiently. It can reduce the pressure of the network load of the target cell and the decline in the network quality caused by the limited capacity of the target cell and that the related technologies do not differentiate whether the candidate cells support the VAMOS. And, it has the advantages of optimized network resource and improved frequency spectrum utilization ratio.

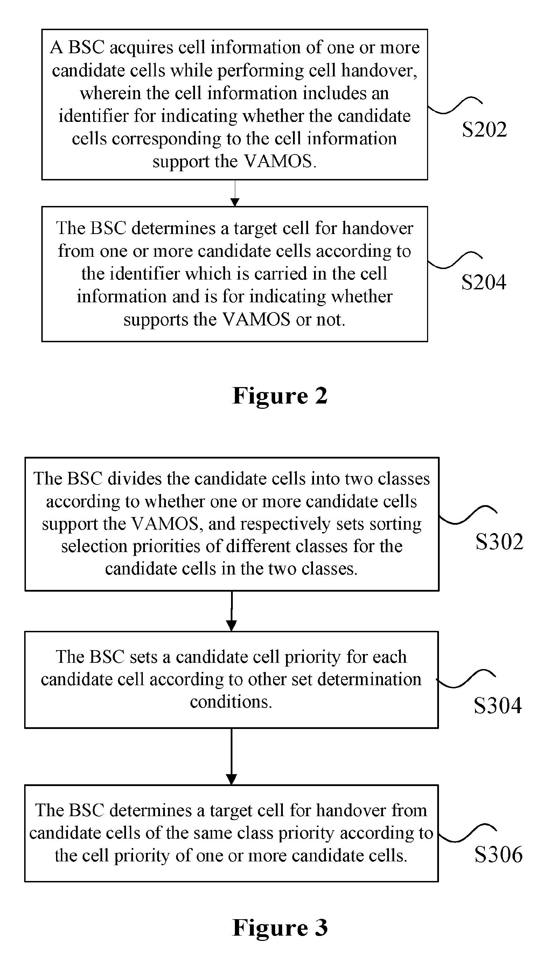

One embodiment of the invention is described below in conjunction with the drawings. Fig. 2 shows a flowchart of a cell handover method according to the embodiments of the invention. As shown in Fig. 2, the process comprises Step S202 to Step S204.

Step S202: A network side (for example BSC; the following takes BSC as an example, but is not limited to this) acquires cell information of one or more candidate cells while performing cell handover, wherein the cell information includes an identifier for indicating whether the candidate cells corresponding to the cell information support the VAMOS.

Step S204: The BSC determines a target cell for handover from one or more candidate cells according to the identifier which is carried in the cell information and is for indicating whether supports the VAMOS or not.

Through the above Step S202 and Step S204, during handover, whether the candidate cells support the VAMOS is taken into consideration. Therefore, different priority definitions can be employed according to different applications, thereby improving the utilization ratio of the network resources and improving the network quality.

In another embodiment of the invention, Step S204 can comprise steps in Fig. 3, wherein Fig. 3 shows a flowchart of a specific target cell handover method according to the embodiments of the invention. As shown in Fig. 3, the step that the BSC determines a target cell for handover from one or more candidate cells according to the identifier can comprise the following steps.

Step S302: The BSC divides the candidate cells into two classes according to whether one or more candidate cells support the VAMOS, and respectively sets sorting selection priorities of different classes (also referred to as class priorities) for the candidate cells in the two classes, wherein the class priorities of the candidate cells of the same class are the same. The priorities of the two classes are set according to application scenarios and network conditions.

Step S304: The BSC sets a cell priority for each of one or more candidate cells; and each candidate cell sets the priority of the candidate cell according to other set determination conditions (such as: network traffic, handover success rate etc.).

Step S306: The BSC determines a target cell for handover from candidate cells of the same class priority according to the cell priority of one or more candidate cells.

Preferably, if the number of idle channels of the candidate cells supporting the VAMOS is more than or equal to the number of idle channels of the candidate cells not supporting the VAMOS in one or more candidate cells, the class priority of the candidate cells supporting the VAMOS is higher than the priority of the candidate cells not supporting the VAMOS; and if the number of idle channels of the candidate cells supporting the VAMOS is less than the number of idle channels of the candidate cells not supporting the VAMOS in one or more candidate cells, the class priority of the candidate cells supporting the VAMOS is lower than the priority of the candidate cells not supporting the VAMOS.

Preferably, the class priority is higher than the cell priority.

Preferably, the BSC can also determine a target cell for handover from one or more candidate cells according to whether a terminal in which the cell handover occurs supports the VAMOS and the identifier.

The variant embodiments of the above embodiments are described below.

### Embodiment one

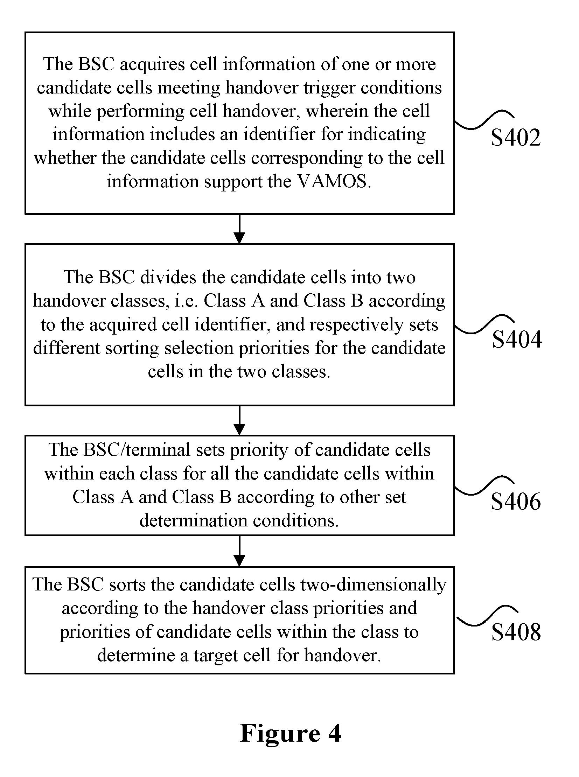

Fig. 4 shows a flowchart of a method according to embodiment one of the invention. As shown in Fig. 4, the method comprises Step S402 to Step S406 as follows.

Step S402: The BSC acquires cell information of one or more candidate cells that meet handover trigger conditions while performing cell handover, wherein the cell information includes an identifier for indicating whether the candidate cells corresponding to the cell information support the VAMOS.

Step S404: The BSC divides the candidate cells into two handover classes, i.e. Class A and Class B, according to the acquired cell identifier, and respectively sets sorting selection priorities of different classes for the candidate cells in the two classes, wherein Class A comprises all the candidate cells supporting the VAMOS, and Class B comprises all the candidate cells not supporting the VAMOS. The priorities of Class A and Class B are set according to application scenarios and network conditions. The class priorities of the candidate cells of the same class are the same. The sorting selection priorities of these two handover classes are handover class priorities.

Step S406: The BSC sets priority for all the candidate cells within Class A and Class B according to other set determination conditions (for example: network traffic, handover success rate etc.), wherein the priority of each candidate cell within each class is priority of candidate cell within the class.

Step S408: The BSC sorts the candidate cells two-dimensionally according to the handover class priorities and priorities of candidate cells within the class to determine a target cell for handover.

### Embodiment two

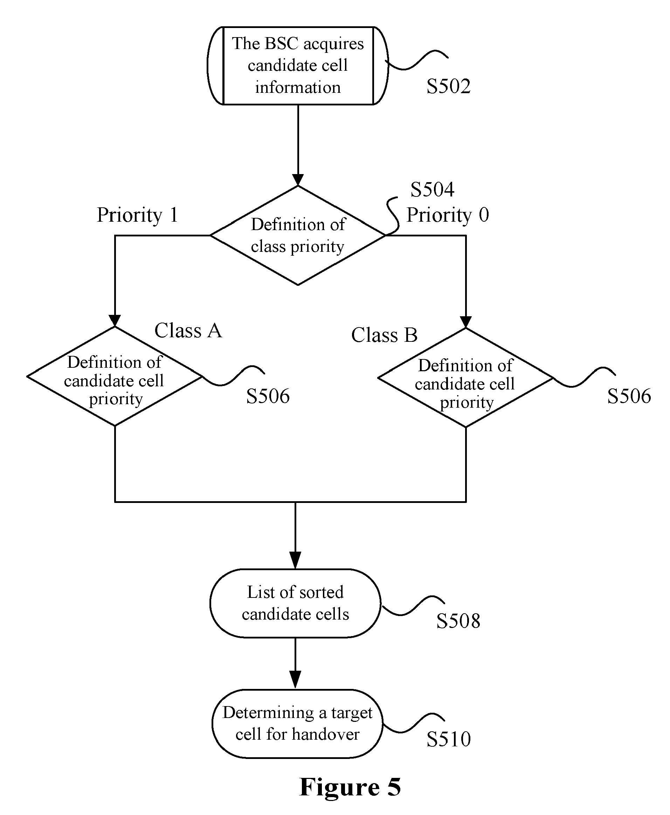

In a case where the number of idle channels of the candidate cells supporting the VAMOS is more than or equal to the number of idle channels of the candidate cells not supporting the VAMOS, a terminal supporting the VAMOS is switched to a candidate cell supporting the VAMOS preferentially. Fig. 5 shows a flowchart of a method according to embodiment two of the invention. As shown in Fig. 5, the method comprises Step S502 to Step S51 0 as follows.

Step S502: The BSC, during the sorting of candidate cells, divides all the candidate cells that meet handover conditions into two handover classes, i.e. Class A and Class B, according to the acquired cell identifier while performing cell handover, wherein Class A comprises all the candidate cells supporting the VAMOS, and Class B comprises all the candidate cells not supporting the VAMOS.

Step S504: Setting class priority. The BSC defines the priority of the candidate cells supporting the VAMOS (i.e. Class A) as 1, and defines the priority of the candidate cells not supporting the VAMOS (i.e. Class B) as 0. The priority 1 of the cells supporting the VAMOS is higher than the priority 0 of the cells not supporting the VAMOS.

Step S506: Setting priority of candidate cell within the class. The BSC sets the priority respectively corresponding to the candidate cell within Class A and Class B according to other set conditions (for example: network traffic, handover success rate etc.), wherein 8 priority levels are defined, i.e. 0-7 level; priority 0 is lowest and priority 7 is highest. First, within Class A with the class priority 1, sorting is performed according to other conditions, starting from 7; and specific sorting of priority can be determined according to the number of candidate cells within Class A. For example: if there are 3 candidate cells within Class A, the priority order is 7, 6, 5. Then sorting is performed on the candidate cells within Class B of lower priority according to other conditions. The priority order of 5 candidate cells within Class B is 7, 6, 5, 4, 3.

Step S508: The BSC performs two-dimensionally combined priority sorting on the candidate cells, wherein the priority of each candidate cell is determined by two parameters which are class priority and priority of candidate cell within the class respectively. Final priority sorting is performed on the candidate cells according to two-dimensionally combined priority. Table 1 is a way to perform priority sorting on the candidate cells, as shown in Table 1.

**Table 1**

| Priority of handover classes (Step S504) | Priority of candidate cell within the class (Step S506) | Final priority sorting of the candidate cell (Step S508) |
|---|---|---|
| 1 (Class A) | 7 | 1 |
| 1 (Class A) | 6 | 2 |
| 1 (Class A) | 5 | 3 |
| 0 (Class B) | 7 | 4 |
| 0 (Class B) | 6 | 5 |
| 0 (Class B) | 5 | 6 |
| 0 (Class B) | 4 | 7 |
| 0 (Class B) | 3 | 8 |

Step S510: Two-dimensional sorting is performed on the candidate cells according to handover class priorities and priorities of candidate cells within the class to determine a target cell for handover.

### Embodiment three

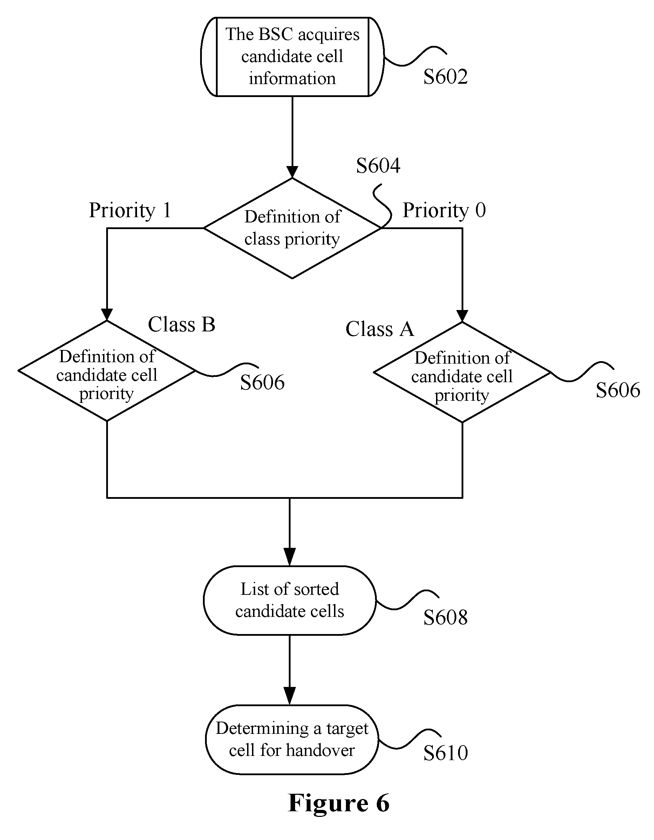

In a case where the number of idle channels of the candidate cells supporting the VAMOS is less than the number of idle channels of the candidate cells not supporting the VAMOS, it is considered that a terminal supporting the VAMOS is switched to a candidate cell not supporting the VAMOS preferentially. Fig. 6 shows a flowchart of a method according to embodiment three of the invention. As shown in Fig. 6, the method comprises Step S602 to Step S61 0 as follows.

Step S602: The BSC, during the sorting of candidate cells, divides all the candidate cells that meet handover conditions into two handover classes, i.e. Class A and Class B, according to the acquired cell identifier while performing cell handover, wherein Class A comprises all the candidate cells supporting the VAMOS, and Class B comprises all the candidate cells not supporting the VAMOS.

Step S604: Setting class priority. The BSC defines the priority of Class A as 0, and defines the priority of Class B as 1. The priority 1 of the candidate cells not supporting the VAMOS is higher than the priority 0 of the candidate cells supporting the VAMOS.

Step S606: Setting priority of candidate cell within the class. The BSC sets the priority respectively corresponding to the candidate cell within Class B and Class A according to other conditions (for example: network traffic, handover success rate etc.), wherein 8 priority levels are defined, i.e. 0-7 level; priority 0 is lowest and priority 7 is highest. First, sorting is performed on the candidate cells supporting the VAMOS within Class B according to other conditions. Then sorting is performed on the candidate cells within Class A according to other conditions. For example: if there are 5 candidate cells within Class B, the priority order is 7, 6, 5, 4, 3, and if there are 3 candidate cells within Class A, the priority order is 7, 6, 5.

Step S608: The BSC performs two-dimensionally combined priority sorting on the candidate cells, wherein the priority of each candidate cell is determined by two parameters which are class priority and priority of candidate cell within the class respectively. Final priority sorting is performed on the candidate cells according to two-dimensionally combined priority. Table 2 is a way to perform priority sorting on the candidate cells, as shown in Table 2.

**Table 2**

| Priority of handover classes (Step S604) | Priority of candidate cell within the class (Step S606) | Final priority of the candidate cell (Step S608) |
|---|---|---|
| 1 (Class B) | 7 | 1 |
| 1 (Class B) | 6 | 2 |
| 1 (Class B) | 5 | 3 |
| 1 (Class B) | 4 | 4 |
| 1 (Class B) | 3 | 5 |
| 0 (Class A) | 7 | 6 |
| 0 (Class A) | 6 | 7 |
| 0 (Class A) | 5 | 8 |

From the descriptions above, it can be seen that the present invention realizes the following technical effects: optimizing the network resource and improving the frequency spectrum utilization ratio by taking whether the candidate cells support the VAMOS as one of considerations of determining the target cell for handover.

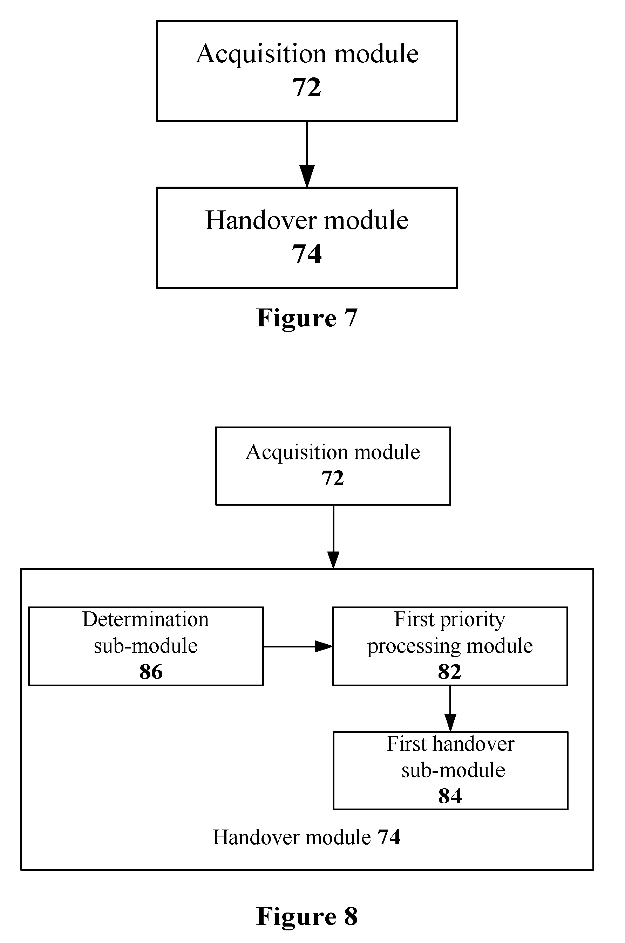

In another embodiment, a device is also provided. Fig. 7 shows a structure diagram of a device according to the embodiments of the invention. As shown in Fig. 7, the device comprises: an acquisition module 72 and a handover module 74. The structure is described below in detail.

The acquisition module 72 is adapted for acquiring cell information of one or more candidate cells, wherein the cell information includes an identifier for indicating whether the candidate cells corresponding to the cell information support the VAMOS; and the handover module 74 is connected to the acquisition module 72 and adapted for determining a target cell for handover from one or more candidate cells according to the cell information identifier.

Fig. 8 shows a preferred structure diagram of a device according to the embodiments of the invention. As shown in Fig. 8, the handover module 74 comprises: a first priority processing sub-module 82 and a first handover sub-module 84, which are described in detail below.

The first priority processing sub-module 82 is adapted for dividing the candidate cells into two classes according to whether one or more candidate cells support the VAMOS, and respectively sets different class priorities for the candidate cells in the two classes, wherein the class priorities of the candidate cells of the same class are the same; and the first handover sub-module 84 is connected to the first priority processing sub-module 82 and adapted for determining a target cell for handover from one or more candidate cells according to the class priority of one or more candidate cells.

As shown in Fig. 8, the handover module 74 also comprises: a determination sub-module 86, which is connected to the first priority processing sub-module 82 and adapted for determining whether the number of idle channels of the candidate cells supporting the VAMOS is more than or equal to the number of idle channels of the candidate cells not supporting the VAMOS in one or more candidate cells; and the first priority processing sub-module 82 is specifically adapted for, when the determination sub-module 86 determines that the number of the idle channels of the candidate cells supporting the VAMOS is more than or equal to the number of the idle channels of the candidate cells not supporting the VAMOS in one or more candidate cells, setting the class priority of the candidate cells supporting the VAMOS higher than the priority of the candidate cells not supporting the VAMOS, and when the determination sub-module 86 determines that the number of the idle channels of the candidate cells supporting the VAMOS is less than the number of the idle channels of the candidate cells not supporting the VAMOS in one or more candidate cells, setting the class priority of the candidate cells supporting the VAMOS lower than the priority of the candidate cells not supporting the VAMOS.

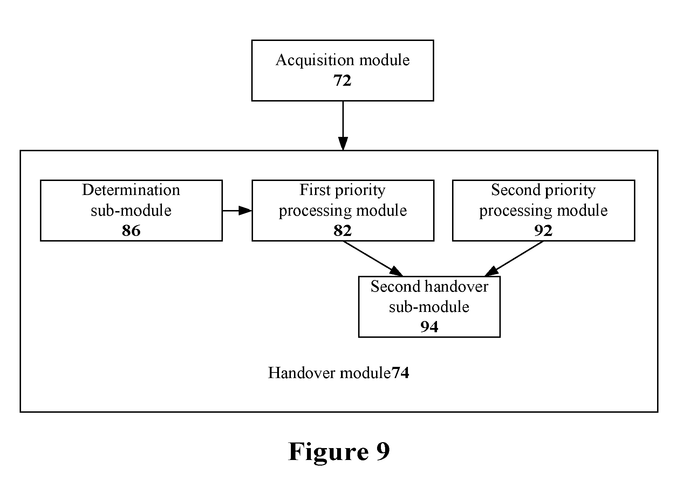

Fig. 9 shows another preferred structure diagram of a device according to the embodiments of the invention. As shown in Fig. 9, the handover module 74 also comprises: a second priority processing sub-module 92 and a second handover sub-module 94, which are described in detail below.

The second priority processing sub-module 92 is adapted for setting a cell priority for each of one or more candidate cells; and the second handover sub-module 94 is connected to the first priority processing sub-module 82 and the second priority processing sub-module 92 and adapted for determining a target cell for handover from one or more candidate cells according to the class priority and the candidate cell priority.

In the embodiments of the invention, the class priority set by the first priority processing sub-module 82 is higher than the candidate cell priority set by the second priority processing sub-module 92.

To sum up, after the network side triggers cell handover, by using whether the candidate cells support the VAMOS as one of considerations of determining the target cell for handover, the candidate cells can be selectively switched to the target cell in which the network resources can be used efficiently. With the method and the device, the network resource is optimized and the frequency spectrum utilization ratio is improved.

Obviously, those skilled in the art should understand that, each module or each step above of the invention can be implemented by a general-purpose computing device. Modules or steps can be concentrated on a single computing device or distributed on a network composed of a plurality of computing devices, and optionally can be implemented by computing device-executable program codes. Therefore, modules or steps can be executed through a computing device by storing in a storage device, or modules or steps can be implemented by respectively making them into each integrated circuit module, or making a plurality of modules or steps of them into a single integrated circuit module. In this way, the invention is not limited to any specific combination of hardware and software.

The above is only the preferred embodiment of the invention and not intended to limit the invention. To those skilled in the art, various changes and variations can be made to the invention. Any modifications, equivalent replacements, improvements and the like within the spirit and principle of the invention shall fall within the scope of protection of the invention.

## Claims

1. A cell handover method, **characterized by**, comprising the steps of:
a network side obtaining cell information of one or more candidate cells while performing cell handover, wherein the cell information includes an identifier for indicating whether the candidate cells corresponding to the cell information support voice services over adaptive multi-user orthogonal sub channels (VAMOS); and
the network side determining a target cell for handover from the one or more candidate cells according to the identifier.

2. The method according to claim 1, **characterized in that** the step that the network side determining a target cell for handover from the one or more candidate cells according to the identifier comprises:
the network side dividing the candidate cells into two classes according to whether the one or more candidate cells support the VAMOS, and respectively setting different class priorities for the candidate cells in the two classes, wherein the class priorities of the candidate cells of the same class are the same; and
the network side determining a target cell for handover from the one or more candidate cells according to the class priority of the one or more candidate cells.

3. The method according to claim 2, **characterized in that** the step that the network side determining a target cell for handover from the one or more candidate cells according to the class priority of the one or more candidate cells comprises:
the network side setting a cell priority for each of the one or more candidate cells; and
the network side determining a target cell for handover from the candidate cells of the same class priority according to the cell priority of the one or more candidate cells.

4. The method according to claim 2 or 3, **characterized in that**, if the number of idle channels of the candidate cells supporting the VAMOS is more than or equal to the number of idle channels of the candidate cells not supporting the VAMOS in the one or more candidate cells, the class priority of the candidate cells supporting the VAMOS is higher than the priority of the candidate cells not supporting the VAMOS; and if the number of idle channels of the candidate cells supporting the VAMOS is less than the number of idle channels of the candidate cells not supporting the VAMOS in one or more candidate cells, the class priority of the candidate cells supporting the VAMOS is lower than the priority of the candidate cells not supporting the VAMOS.

5. The method according to claim 3, **characterized in that** the class priority is higher than the cell priority.

6. The method according to any one of claims 1 to 3, **characterized in that** the step that the network side determining a target cell for handover from the one or more candidate cells according to the cell information comprises:
the network side determining a target cell for handover from the one or more candidate cells according to whether a terminal in which the cell handover occurs supports the VAMOS and the identifier.

7. A cell handover device, located on a network side, **characterized by** comprising:
an acquisition module, adapted for acquiring cell information of one or more candidate cells, wherein the cell information includes an identifier for indicating whether the candidate cells corresponding to the cell information support VAMOS; and
a handover module, adapted for determining a target cell for handover from the one or more candidate cells according to the cell information identifier.

8. The device according to claim 7, **characterized in that** the handover module comprises:
a first priority processing sub-module, adapted for dividing the candidate cells into two classes according to whether the one or more candidate cells support the VAMOS, and respectively setting different class priorities for the candidate cells in the two classes, wherein the class priorities of the candidate cells of the same class are the same; and
a first handover sub-module, adapted for determining a target cell for handover from the one or more candidate cells according to the class priority.

9. The device according to claim 8, **characterized in that** the handover module further comprises:
a second priority processing sub-module, adapted for setting a cell priority for each of the one or more candidate cells; and
a second handover sub-module, adapted for determining a target cell for handover from the candidate cells of the same class priority according to the class priority and the cell priority.

10. The device according to claim 8 or 9, **characterized in that** the handover module also comprises:
a determination sub-module, adapted for determining whether the number of idle channels of the candidate cells supporting the VAMOS is more than or equal to the number of idle channels of the candidate cells not supporting the VAMOS in the one or more candidate cells; and
the first priority processing sub-module is specifically adapted for, when the determination sub-module determines that the number of the idle channels of the candidate cells supporting the VAMOS is more than or equal to the number of the idle channels of the candidate cells not supporting the VAMOS in the one or more candidate cells, setting the class priority of the candidate cells supporting the VAMOS higher than the priority of the candidate cells not supporting the VAMOS; and when the determination sub-module determines that the number of the idle channels of the candidate cells supporting the VAMOS is less than the number of the idle channels of the candidate cells not supporting the VAMOS in the one or more candidate cells, setting the class priority of the candidate cells supporting the VAMOS lower than the priority of the candidate cells not supporting the VAMOS.
